Europäisches Patentamt

European Patent Office

Office européen des brevets

(11) Publication number: **0 238 345**
A2

## (12) EUROPEAN PATENT APPLICATION

(21) Application number: 87302390.7

(22) Date of filing: 19.03.87

(51) Int. Cl.4: **C 08 F 4/64**
C 08 F 10/00

(30) Priority: 20.03.86 FR 8604019

(43) Date of publication of application:
23.09.87 Bulletin 87/39

(84) Designated Contracting States:
BE DE ES FR GB IT NL

(71) Applicant: **BP Chemicals Limited**
**Belgrave House 76 Buckingham Palace Road**
**London, SW1W 0SU (GB)**

(72) Inventor: **Bailly, Jean-Claude André**
**BP Chimie SA**
**F-13117 Lavera (FR)**

**Sandis, Stylianos**
**BP Chimie SA**
**F-13117 Lavera (FR)**

(74) Representative: **Delgrange, Jean Paul Maurice Emile et al**
**BP INTERNATIONAL LIMITED Patents Division Chertsey Road**
**Sunbury-on-Thames Middlesex TW16 7LN (GB)**

(54) Catalysts for the polymerisation of alpha-olefins.

(57) The invention relates to a process for the manufacture of titanium trichloride-based catalysts intended for the polymerisation of alpha-olefins. This process consists essentially in first reducing into solid particles titanium tetrachloride by means of organoaluminium compounds and in the presence of aliphatic ethers, then maintaining the solid particles between 20 and 115°C for 0.25 to 24 hours, washing the resulting solid particles with a liquid hydrocarbon, and bringing the washed solid particle into contact with one or more alpha-olefins at between 0 and 60°C, in the presence of organoaluminium compounds, so that the catalyst obtained contains from 0.05 to 10g of polyalpha-olefin per milligram-atom of titanium.

**Description**

CATALYSTS FOR THE POLYMERISATION OF ALPHA-OLEFINS

The present invention relates to improved titanium trichloride-based catalysts which can be used for the polymerisation of alpha-olefins, in combination with an organometallic cocatalyst.

It is known to polymerise alpha-olefins, such as ethylene or propylene, at pressures which are generally less than 4 MPa, by means of a catalyst system comprising, on the one hand, a titanium trichloride-based catalyst and, on the other hand, an organometallic cocatalyst consisting in most cases of an organoaluminium compound. Various ways of preparing the titanium trichloride-based catalysts have already been proposed. One of these consists in reducing titanium tetrachloride by means of an organometallic compound which is a reducing agent, such as diethylaluminium chloride; a precipitate containing principally titanium trichloride is formed, but the latter has relatively low catalytic activity in the polymerisation of alpha-olefins; furthermore, this catalyst leads to polymers of low apparent density, and this leads to difficulties when the polymers are fabricated.

In order to obtain more robust catalysts and to obtain polymers of higher apparent density, it has been proposed to treat such a catalyst with a small quantity of propylene at relatively low temperatures. However, this catalyst, when treated in this way, has a relatively low catalytic activity in the polymerisation of alpha-olefins.

It is known from European Application No. 68799 and from U.S. Patent No. 4478951 to obtain strong, non-friable, TiCl₃ based catalysts by prepolymerising under polymerisation conditions ethylene, or a mixture of propylene and of a higher alpha-olefin in the presence of a solid compound containing TiCl₃ in the "beta" crystallographic form. The resulting prepolymer is further treated with a chlorinated hydrocarbon and a Lewis base, such as an ether.

U.S. patent No. 4200717 describes a process for obtaining titanium trichloride (TiCl₃) based catalysts by precipitating particles from a solution containing an ether and dissolved TiCl₃ referred to as "liquid TiCl₃". The resulting particles containing TiCl₃ in an undisclosed crystallographic form are submitted to a prepolymerisation with propylene under polymerisation conditions. Compared to the particles which are not transformed into a prepolymer, the latter exhibit a substantial higher ability to produce crystalline polymers having higher bulk densities and increased tensile impact strength.

It is also known to prepare titanium trichloride-based catalysts in the presence of an aliphatic ether according to the processes described in French Patent No 2,340,131 and No 2,181,565, these catalysts having not only a high catalytic activity but also a high stereospecificity in propylene polymerisation. Furthermore, these catalysts result in polymers whose apparent density is relatively high. However, it has been found that these catalysts lose some of these advantages when stored at ambient temperature, even under an inert gas atmosphere. It has been proposed to store them at a lower temperature in such cases, but this method of storage is restrictive and costly. Furthermore, it has been noted that during the polymerisation a part of the aliphatic ether present in these catalysts was released into the liquid diluent in which the polymerisation takes place. In industrial usage it is obviously advantageous to be able to reuse this diluent in a subsequent polymerisation, but the aliphatic ether has to be removed before reusing the diluent, because it can interfere with the polymerisation. However, the removal of the aliphatic ether from the diluent medium is a difficult and costly operation.

It has now been found that it is possible to obtain titanium trichloride-based catalysts prepared in the presence of an aliphatic ether, these catalysts having a high stereospecificity in the polymerisation of alpha-olefins such as propylene. These catalysts may be readily stored at ambient temperature without deteriorating with the passage of time and may, furthermore, be used in polymerisation, especially in a liquid diluent, without contaminating this diluent with substantial quantities of ether and, consequently, without requiring a special purifying operation.

The present invention relates more particularly to a process for the manufacture of titanium trichloride-based catalysts, comprising successively:

(a) in a first stage, forming a suspension of solid particles by reducing titanium tetrachloride at a temperature of between -10 and 80°C by means of at least one organoaluminium compound of formula

$AlR_nX_{3-n}$

in which R is an alkyl, cycloalkyl, aryl or aralkyl group containing 1 to 12 carbon atoms, X a hydrogen, chlorine or bromine atom, and n an integer or fraction capable of assuming any value from 1 to 3, the organoaluminium compound(s) being used in such quantity that the ratio of the number of moles of titanium tetrachloride to the number of organic gram-equivalents of the organoaluminium compound is between 1.2 and 50, and the reduction being carried out in a liquid hydrocarbon, in the presence of 2 to 5 moles, per mole of organoaluminium compound, of one or more aliphatic ethers of formula

$R'OR''$

in which R' and R'' are identical or different alkyl groups containing from 1 to 12 carbon atoms;

(b) in a second stage, keeping the suspension of solid particles obtained in the first stage, at a temperature of between 20 and 115°C for a period of between 15 minutes and 24 hours;

(c) in a third stage, washing the solid particles resulting from the second stage by means of a liquid hydrocarbon;

(d) in the fourth stage, bringing the solid particles resulting the third stage into contact with one or more alpha-olefins in such quantity that the solid catalyst obtained contains from 0.05 to 10g of polyalpha-olefin per milligram-atom of titanium, this contact being performed at a temperature of between 0 and 60°C, in the presence of at least one organoaluminium compound of formula

$AlR_nX_{3-n}$

in which R, X and n correspond to the same definitions as previously, this organoaluminium compound being identical to, or different from, that used in the first stage.

The quantity of titanium tetrachloride used in the first stage is between 1.2 and 50 moles, and preferably between 1.3 and 20 moles, per organic gram-equivalent of the organoaluminium compound. For example, when the latter consists of a dialkylaluminium chloride which has two reducing organic groups per molecule, that is to say two organic gram-equivalents per mole, this means that the molar ratio: titanium tetrachloride/dialkylaluminium chloride is between 2.4 and 100, and preferably between 2.6 and 40.

The organoaluminium compound corresponds to the general formula $AlR_nX_{3-n}$ in which R, X and n correspond to the definitions given earlier; in this formula, n is an integer or fraction which may assume any value from 1 to 3, and preferably from 1.5 to 3. This compound is preferably chosen from dialkylaluminium monohalides or alkylaluminium sesquihalides, such as diethylaluminium monochloride or ethylaluminium sesquichloride.

The aliphatic ether corresponds to the general formula R'OR'' in which R' and R'' are identical or different alkyl groups containing from 1 to 12 carbon atoms, and preferably from 2 to 6 carbon atoms. It may be chosen, in particular, from dibutyl ether, diisoamyl ether or dihexyl ether.

For reasons of convenience, the process of the invention is carried out in the presence of an inert solvent such as a liquid saturated hydrocarbon. This solvent may be mixed with titanium tetrachloride, the organoaluminium compound, the ether, or two or more of these compounds.

The reduction of titanium tetrachloride is advantageously carried out using low-turbulence stirring, so as to produce particles of a uniform shape, advantageously substantially spherical, and with a very narrow particle size distribution.

The reduction of titanium tetrachloride is preferably carried out by a procedure comprising preparing at a temperature of between -40 and 50°C, and preferably between 0 and 30°C, a mixture of the organoaluminium compound(s) and of at least a proportion of the ether(s); this quantity of ether is chosen so that the ratio of the number of moles of ether to the number of moles of the organoaluminium compound(s) lies between 0.3 and 5. This mixture may be advantageously diluted with an inert solvent such as a liquid saturated hydrocarbon. The reduction of titanium tetrachloride is then carried out preferably at a temperature in the range 0-60°C by adding the mixture which has been prepared in this manner to titanium tetrachloride; where applicable, the latter may be diluted with a proportion of the ether(s), and, if appropriate, with a liquid saturated hydrocarbon. This addition is advantageously performed slowly and uniformly, with low-turbulence stirring, in order to ensure good contact between the reactants without causing the formation of large quantities of titanium trichloride particles with a diameter of less than 10 microns.

The reduction of titanium tetrachloride is usually carried out at a constant temperature, but it is also possible to vary the latter during the operation in order, for example, to complete the reduction at a higher temperature than at the outset of the operation.

In the second stage, the solid particles formed during the first stage are kept in the medium in which they prepared were, preferably with stirring, at a temperature of between 20 and 115°C, and preferably between 30 and 110°C. This operation may be performed at a constant temperature, which may be the same as the temperature in the first stage. It is also possible to vary the temperature during the second stage, in most cases by raising the temperature during the operation. The second stage is carried out over a period of between 15 minutes and 24 hours, and preferably between 1 and 4 hours.

In the third stage, the solid particles obtained in the second stage are washed with a liquid hydrocarbon, to remove the associated soluble compounds, especially excess titanium tetrachloride. The washing may be performed by allowing the solid particles to settle and removing the supernatant liquid; the latter may be replaced with fresh liquid a number of times. The temperature at which this third stage is carried out is not critical; this temperature is advantageously in the region of 20°C or higher. The solid particles obtained in this stage preferably contain less than 2 millimoles, and most preferably less than 1 millimole, of titanium tetrachloride per mole of titanium trichloride contained in the solid particles.

The resulting particulate solid compound consists of uniformly shaped, preferably substantially spherical, particles with a mass-average diameter of between 5 and 100 microns and a narrow particle size distribution, which are such, in particular, that less than 1% by weight of the particles have a mass-average diameter of less than 2 microns. This solid compound contains titanium trichloride, aluminium trichloride and the aliphatic ether; it corresponds to the empirical formula: $TiCl_3 \bullet xAlCl_3 \bullet yR'OR''$ in which R' and R'' correspond to the definitions given earlier and in which

x is from 0.005 to 0.1

and y is from 0.05 to 0.2.

This solid compound has an X-ray diffraction spectrum corresponding to a titanium trichloride of substantially "delta" structure, but containing from 5 to 20% by weight of titanium trichloride with a "beta" structure.

The fourth stage is carried out at a temperature of between 0 and 60°C and preferably of between 10 and 40°C, in the presence of one or more organoa-luminium compounds of formula $AlR_nX_{3-n}$, employed in such quantity that the atomic ratio Al/Ti lies preferably between 0.1 and 10, and more especially between 0.5 and 5, and in the presence of one or more alpha-olefins chosen, in particular, from ethylene, propylene, 1-butene, 4-methyl-1-pentene, or 1-hexene; this alpha-olefin is preferably identical to that which is chosen for use in the subsequent polymerisation. This operation is advantageously performed in the presence of hydrogen. Preferably, the alpha-olefin or the alpha-olefins are added slowly and uniformly to the reaction medium over a period of between 15 minutes and 24 hours, and preferably of between 30 minutes and 10 hours. The quantity of alpha-olefins which is employed is such that the solid catalyst obtained may contain from 0.05 to 10g, preferably 0.1 to 5g, of polyalpha-olefins per milligram-atom of titanium.

The fourth stage may be carried out in the presence of a liquid dispersant, such as a liquid saturated hydrocarbon or alpha-olefin, or in gaseous phase, that is to say in the absence of any liquid dispersant, the solid compound in this case, having been dried beforehand in an inert atmosphere or under vacuum.

The solid catalyst according to the invention may be washed with a liquid hydrocarbon before it is used in the polymerisation of alpha-olefins. It is in the form of uniformly shaped, preferably substantially spherical, particles with a mass-average diameter of between approximately 10 and 150 microns and with a very narrow particle size distribution; this distribution is usually such that fewer than 0.05% by weight of the particles have a mass-average diameter of less than 3 microns. Furthermore, this solid catalyst has a relatively low specific surface area, in most cases less than 2 $m^2/g$ (BET) and a porosity, as measured by nitrogen adsorption, of less than approximately 0.1 $cm^3/g$, indicating the absence of micropores.

The solid catalyst is also characterised by an X-ray diffraction spectrum which is substantially identical to that of the solid compound obtained in the third stage.

The solid catalyst according to the invention is additionally characterised by its very low content of aliphatic ether, the latter being generally less than 0.001 mole of ether per gram-atom of titanium.

This catalyst has, in particular, the advantage of being capable of being stored at ambient temperature and in an inert atmosphere, for long periods, without appreciable change. Furthermore, it possesses a high catalytic activity in the polymerisation of alpha-olefins, both in the presence of a liquid dispersant and in gaseous phase. This catalyst may be employed in the polymerisation or copolymerisation of alpha-olefins of formula $CH_2=CHR'''$, in which $R'''$ denotes hydrogen or an alkyl radical containing from 1 to 8 carbon atoms. In polymerisation of this type the catalyst is combined with one or more cocatalysts, preferably chosen from organometallic compounds of metals of Groups II and III of the Periodic Classification of the Elements, such as organoaluminium compounds of average formula $AlR^{iv}_m X_{3-m}$, in which $R^{iv}$ denotes an alkyl group containing from 1 to 12 carbon atoms, X denotes a hydrogen atom or a halogen atom, preferably chlorine, and m an integer or fraction which can assume any value from 1 to 3. These cocatalysts are advantageously employed in such quantities that the atomic ratio:
Metals of Groups II and III in the cocatalysts/titanium in the catalyst lies between 1 and 50.

The catalysts of the invention are especially suitable for use in the polymerisation of olefins using what is known as a "low pressure" technology, which generally consists in operating at a pressure of less than 4 MPa and at a temperature of between 40 and 150°C. The polymerisation may be carried out in a liquid in which the catalyst is dispersed, which can be, for example, the liquefied monomer or a saturated aliphatic hydrocarbon; the polymerisation may also be performed in gaseous phase in the absence of liquid diluent. During the polymerisation, the average molecular weight of the polymer formed may be modified by means of a chain-transfer agent such as hydrogen, in molecular proportions, relative to the olefin to be polymerised, which are usually between 0.01 and 60%. The polymerisation is stopped when the degree of polymerisation which is required in the reaction has been reached; the average molecular weight of the polymer obtained is in most cases between 50,000 and 1,000,000, in the case of polymers intended for the usual applications of thermoplastics. As a result of the high activity of the catalysts of the invention, the polymers produced contain only very small quantities of catalyst residues and usually they can be fabricated without having to undergo a purification treatment.

The catalysts prepared according to the invention are of special interest for the homopolymerisation of propylene and of its higher homologues, since they combine a high activity with high stereospecificity. Expressed as a percentage by weight of polypropylene which is insoluble in boiling n-heptane, this stereospecificity can be as high as 95% or more.

They are also of especial interest for the copolymerisation of propylene with ethylene and/or alphaolefins containing from 4 to 8 carbon atoms, and/or dienes, especially for the purpose of producing low-crystallinity elastomeric copolymers.

The following examples, which do not imply any limitation, illustrate the present invention.

## Example 1

### (a) Preparation of the catalyst

The operation is carried out in a 1-litre glass reactor fitted with a mechanical stirrer consisting of a flat parallelepipedal paddle, 35 x 50 x 2 mm in size, rotating at 220 rev/min. The reactor is equipped with a device for heating or cooling through the wall.

Into this reactor are introduced 380g (2 moles) of $TiC_4$, 120 ml of n-heptane and 70g (0.44 mole) of diisoamyl ether of 25°C. The mixture is heated to 35°C and, at this temperature, a solution at a temperature of 25°C, and which has been obtained by mixing 27g (0.17 mole) of diisoamyl ether with 30g (0.25 mole) of diethylaluminium chloride dissolved in 180 ml of n-heptane, is added at a steady rate over 4 hours. A precipitate is produced, which is stirred for 1 hour at 35°C, and then for 2 hours at 65°C. The precipitate obtained, which contains 0.48 gram-atom of titanium, is washed 5 times by redispersion in 500 ml of n-heptane at 65°C. The solid prepared in this manner is violet in colour and consists of particles of a substantially spherical shape with a mass-average diameter of 15 microns; it has a composition which corresponds to the following empirical formula: $TiCl_3$. 0.01 $AlCl_3$. 0.12 diisoamyl ether.

The operation is continued in a stainless steel reactor with a capacity of 5 litres, fitted with a stirring system rotating at 500 revolutions per minute. 2,000 ml of an n-heptane suspension of the above solid compound, washed beforehand and containing 500 milligram-atoms of titanium, are added. 500 millimoles of diethylaluminium monochloride are then added to the reactor and the reactor temperature is set at 25°C. Gaseous propylene is then introduced into the reactor at a rate of 60 g/h for 5 hours. At the end of this time, propylene addition is discontinued and the catalyst suspension thus produced is kept stirred for 1 hour at the same temperature. At the end of this time, the stirring system is stopped, the catalyst obtained is allowed to settle and three washings of the catalyst are carried out by drawing off the supernatant liquid and reintroducing 2,000 ml of n-heptane.

The catalyst prepared in this manner contains 0.01 millimole of aluminium trichloride, less than 0.001 millimole of diisoamyl ether and 0.6g of polypropylene, per milligram-atom of titanium. As determined by X-ray diffraction, the structure of the titanium trichloride obtained corresponds to 90% of the "delta" structure and 10% of the "beta" structure. The catalyst is in the form of substantially spherical particles with a mass-average diameter of 25 microns and a very narrow particle size distribution, such that less than 0.05% by weight of the particles have a diameter of below 3 microns. The specific surface of the catalyst is less than 2 $m^2/g$ (BET) and its porosity, as determined by nitrogen adsorption, is approximately 0.04 $cm^3/g$.

The catalyst may be stored as a suspension in n-heptane, in a nitrogen atmoshere, for over a month, at ambient temperature (20°C), without any deterioration in its properties being observed.

(b) Polymerisation of propylene

The operation is carried out in a 5-litre stainless steel reactor fitted with a mechanical stirrer of the helical type rotating at 500 revolutions per minute; the reactor is also fitted with a heating and cooling jacket device. After purging with nitrogen, 2 litres of n-heptane, 16 millimoles of diethylaluminium chloride and a quantity of the freshly prepared catalyst of Example 1(a) corresponding to 0.8 milligram-atom of titanium are successively added to this reactor. While the reaction medium is heated to 65°C, propylene is added to it until a relative pressure of 0.7 MPa is obtained, and this pressure is kept constant throughout the polymerisation; at the end of 30 min, 1 h, 1 h 30, 2 h, 3 h and 4 h of polymerisation, a volume of 200 ml of hydrogen, measured under normal conditions, is injected into the reactor. After 5 h of polymerisation, the unpolymerised propylene is degassed, the n-heptane is stripped off with steam and the polymer is dried; 840 g of a polypropylene powder are collected, whose characteristics are as follows:
- titanium content : 46 ppm (parts per million by weight);
- fraction soluble in boiling n-heptane: 2.2%;
- melt index (2.16 kg load at 230°C): 2.9g/10 min;
- apparent density in $g/cm^3$: 0.50;
- substantially spherical particles with a mass-average diameter of 250 microns and a very narrow particle size distribution such that 95% by weight of the particles have a mass-average diameter of between 160 and 350 microns.

It is noted that the n-heptane which has been used as the liquid polymerisation diluent medium contains no detectable quantity of diisoamyl ether after the reaction.

(c) Polymerisation of Propylene

The operation described in Example 1(b) is repeated except that the catalyst prepared in Example 1(a) was stored for one month at 20°C under nitrogen before being used.

No substantial changes were observed in the results, compared to the results obtained in Example 1(b).

Example 2

Polymerisation of propylene

To a 2.16-litre stainless steel reactor fitted with a stirring system rotating at 350 revolutions per minute are added, under nitrogen: a quantity of the freshly prepared catalyst of Example 1(a), corresponding to 0.2 milligram-atom of titanium, 1.5 millimoles of diethylaluminium chloride and a volume of 3 litres of hydrogen, measured under normal conditions. 700g of liquid propylene are introduced into the reactor which is heated to 65°C, so that the total pressure is approximately 2.9 MPa. After 90 minutes' polymerisation at 65°C, the reactor is degassed and 300g of a polypropylene powder are obtained, whose characteristics are as follows:
- titanium content : 32 ppm
- fraction soluble in boiling n-heptane : 2.1%;
- melt index, 2.16 kg at 230°C: 3.4 g/10 min;
- apparent density in $g/cm^3$ : 0.50;
- substantially spherical particles having a mass-average diameter of 310 microns and a very narrow particle size distribution such that 93% by weight of the particles have a mass-average diameter of between 250 and 350 microns.

Comparative Example 1

The operation is carried out in a 1-litre glass reactor fitted with a mechanical stirrer consisting of a flat parallelepipedal paddle, 35 x 50 x 2 mm in size, rotating at 220 rev/min. The reactor is equipped with a device for heating or cooling through the wall.

Into this reactor are introduced 380g (2 moles) of $TiCl_4$, 120 ml of n-heptane and 70g (0.44 mole) of diisoamyl ether of 25°C. The mixture is heated to 35°C and, at this temperature, a solution at a temperature of 25°C, and which has been obtained by mixing 27g (0.17 mole) of diisoamyl ether with 30g (0.25 mole) of diethylaluminium chloride dissolved in 180 ml of n-heptane, is added at a steady rate over 4 hours. A precipitate is produced, which is stirred for 1 hour at 35°C, and then for 2 hours at 65°C. The precipitate obtained, which contains 0.48 gram-atom of titanium, is washed 5 times by redispersion in 500 ml of n-heptane at 65°C. The catalyst prepared in this manner is in the form of a violet solid compound consisting of particles of a substantially spherical shape and with a mass-average diameter of 15 microns. It contains 0.01 millimole of aluminium trichloride and 0.12 millimole of diisoamyl ether per milligram-atom of titanium. As determined by X-ray diffraction, the structure of the titanium trichloride corresponds to 90% of the "delta" structure and 10% of the "beta" structure. The catalyst is in the form of substantially spherical particles with a mass-average diameter of 15 microns and a narrow particle size distribution, such that less than 0.2% by weight of the particles have a diameter of below 3 microns.

(b) Polymerisation of Propylene

The operation is carried out in a 5-litre stainless steel reactor fitted with a mechanical stirrer of the helical type rotating at 500 revolutions per minute; the reactor is also fitted with a heating and cooling jacket device. After purging with nitrogen, 2 litres of n-heptane, 16 millimoles of diethylaluminium chloride and a quantity of a freshly prepared catalyst obtained as described in Example 1(a) and corresponding to 0.8 milligram-atom of titanium are successively added to this reactor. While the reaction medium is heated to 65°C, propylene is added to it until a relative pressure of 0.7 MPa is obtained, and this pressure is kept constant throughout the polymerisation; at the end of 30 min, 1 h 1 h 30, 2 h, 3 h and 4 h of polymerisation, a volume of 200 ml of hydrogen, measured under normal conditions, is injected into the reactor. After 5 h of polymerisation, the unpolymerised propylene is degassed, the n-heptane is stripped off with steam and the polymer is dried; 800 g of a polypropylene powder are collected, whose characteristics are as follows:
- titanium content : 49 ppm (parts per million by weight);
- fraction soluble in boiling n-heptane : 2.3%
- melt index, 2.16 kg at 23°C : 2.3 g/10 min;
- apparent density in g/cm$^3$ : 0.48;
- substantially spherical particles with a mass-average diameter of 245 microns and a narrow particle size distribution such that 92% by weight of the particles have a mass-average diameter of between 160 and 350 microns.

It is noted that the n-heptane which has been used as the liquid polymerisation diluent medium contains approximately 0.05 millimoles of diisoamyl ether per litre after the reaction.

(c) Polymerisation of Propylene

The operation described in Comparative Example 1(b) is repeated, except that the catalyst prepared as described in Comparative Example 1(a) was stored for one month at 20°C under nitrogen before being used.

After 5 h of polymerisation, the unpolymerised propylene is degassed, the n-heptane is stripped off with steam and the polymer is dried; 590g of a polypropylene powder are collected, whose characteristics are as follows:
- titanium content : 66 ppm (parts per million by weight);
- fraction soluble in boiling n-heptane: 2.8%
- melt index, 2.16 kg at 230°C: 2.3 g/10 min;
- apparent density in g/cm$^3$: 0.43
- substantially spherical particles with a mass-average diameter of 220 microns and a narrow particle size distribution such that 85% by weight of the particles have a mass-average diameter of between 160 and 350 microns.

It is noted that the n-heptane which has been used at the liquid polymerisation diluent medium contains approximately 0.05 millimole/litre of diisoamyl ether after the reaction.

**Claims**

1. Process for the manufacture of titanium trichloride-based catalysts suitable for alpha-olefin polymerisation, characterised in that it comprises successively:

(a) in a first stage, forming a suspension of solid particles by reducing titanium tetrachloride at a temperature of between -10 and 80°C, by means of at least one organoaluminium compound of the formula $AlR_nX_{3-n}$

in which R is an alkyl, cycloalkyl, aryl or aralkyl group containing 1 to 12 carbon atoms, X a hydrogen, chlorine or bromine atom, and n an integer or fraction capable of assuming any value from 1 to 3, the organoaluminium compound(s) being used in such quantity that the ratio of the number of moles of titanium tetrachloride to the number of organic gram-equivalents of the organoaluminium compound(s) is between 1.2 and 50, and the reduction being carried out in a liquid hydrocarbon, in the presence of 2 to 5 moles, per mole of organoaluminium compound, of one or more aliphatic ethers of formula R'OR"

in which R' and R" are identical or different alkyl groups containing from 1 to 12 carbon atoms;

(b) in a second stage, keeping the suspension of solid particles obtained in the first stage, at a temperature of between 20 and 115°C, for a period of between 15 minutes and 24 hours;

(c) in a third stage, washing the solid particles resulting from the second stage by means of a liquid hydrocarbon, and

(d) in the fourth stage, bringing the solid particles resulting from the third stage into contact with one or more alpha-olefins in such quantity that the solid catalyst obtained contains from 0.05 to 10g of polyalpha-olefin per milligram-atom of titanium, this contact being performed at a temperature of between 0 and 60°C, in the presence of at least one organoaluminium compound of formula

$AlR_nX_{3-n}$

in which R, X and n correspond to the same definitions as previously, this organoaluminium compound being identical to, or different from, that used in the first stage.

2. Process according to Claim 1, characterised in that the temperature at which the first stage is carried out is between 0 and 60°C.

3. Process according to Claim 1, characterised in that the organoaluminium compound(s) used in the first stage is, or are, chosen from dialkylaluminium monohalides and alkylaluminium sesquihalides.

4. Process according to Claim 1, characterised in that the alkyl groups R' and R" of the aliphatic ether contain from 2 to 6 carbon atoms.

5. Process according to Claim 1, characterised in that the washing of the solid particles with the liquid hydrocarbon during the third stage is carried out so that there remains less than 2 millimoles of titanium tetrachloride per mole of titanium trichloride in the solid catalyst.

6. Process according to Claim 1, characterised in that the fourth stage is carried out at a temperature of between 10 and 40°C.

7. Process according to Claim 1, characterised in that the fourth stage is carried out for a period of between 15 minutes and 24 hours.

8. Process according to Claim 1, characterised in that the organoaluminium compound(s) used in the fourth stage is, or are, in such quantity that the atomic ratio Al/Ti lies between 0.1 and 10.

9. Application of the catalysts prepared according to any one of the preceding claims, in combination with cocatalysts consisting of organometallic compounds of metals of Groups II and III of the Periodic Classification of the Elements, such as organoaluminium compounds of average formula $AlR^{iv}_mX_{3-m}$ in which $R^{iv}$ denotes an alkyl radical containing from 1 to 12 carbon atoms, X a hydrogen or a halogen atom and m an integer or fraction which may assume any value from 1 to 3, in the polymerisation or the copolymerisation, at a pressure of less than 4 MPa and a temperature of between 40 and 150°C, of alpha-olefins of formula $CH_2\text{-}CHR'''$ in which $R'''$ denotes hydrogen or an alkyl radical containing from 1 to 8 carbon atoms.

10. As novel industrial products, the catalysts prepared according to the process described in any one of Claims 1 to 8 inclusive.